# FASCICULE DE BREVET EUROPEEN

(11) **EP 1 633 585 B1**
(45) Date de publication et mention de la délivrance du brevet: **17.08.2011**
(21) Numéro de dépôt: 04767356.1
(22) Date de dépôt: 16.06.2004
(51) Int. Cl.: B60J 7/02

(54) **VEHICULE A TOIT OUVRANT REPLIABLE VERTICALEMENT**
FAHRZEUG MIT EINEM VERTIKAL KLAPPBAREN SONNENDACH
VEHICLE COMPRISING A VERTICALLY FOLDING SUN ROOF

(30) Priorité: 17.06.2003 FR 0307282
(43) Date de publication de la demande: 15.03.2006
(73) Titulaire: Société Européenne de Brevets Automobiles, 75011 Paris (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirières (FR)
(74) Mandataire: Pichat, Thierry
(86) Numéro de dépôt international: PCT/FR2004/001494
(87) Numéro de publication internationale: WO 2004/113107

(56) Documents cités:
- EP-A- 0 764 553
- EP-A- 0 844 125
- EP-A- 1 065 085
- US-A1- 2002 060 471
- US-B1- 6 431 636

## Description

L'invention concerne un véhicule découvrable à toit rigide, escamotable, en plusieurs parties.

On connaît déjà de tels véhicules. En outre, est en particulier connu un véhicule découvrable présentant un axe longitudinal, un avant et un arrière, et comprenant :
- un bâti,
- un habitacle équipé de sièges,
- un toit rigide escamotable, mobile entre un état fermé au-dessus de l'habitacle et un état ouvert dans lequel le toit est rangé derrière les sièges, le toit comprenant un premier élément de toit et un deuxième élément de toit situé derrière le premier élément de toit, dans l'état fermé du toit.

Si le logement arrière, typiquement prévu sur nombre de véhicule pour y ranger le toit dans son état replié, est indisponible pour recevoir ce toit, (parce que par exemple occupé par le moteur du véhicule), se pose alors le problème de ranger le toit ailleurs.

En l'espèce, ce problème est compliqué par l'espace exigu disponible pour le rangement du toit, problème lié à un manque de place, en particulier suivant l'axe longitudinal du véhicule.

Dans l'invention, on prévoit dans ces conditions d'équipées le véhicule de manière qu'il comprenne, en complément des éléments précédents :
- un espace de rangement du toit dans son état ouvert, l'espace étant situé entre les sièges et le logement arrière du véhicule,
- des premiers moyens de déplacement pour amener les premier et second éléments de toit côte à côte, lors de l'ouverture du toit,
- et des seconds moyens de basculement pour déplacer, en les basculant, les premier et second

Le document WO01/40007 décrit un véhicule découvrable comprenant un toit rigide escamotable mobile entre un état fermé et un état ouvert dans lequel le toit est rangé derrière lesdits sièges, le toit comprenant un premier élément de toit et un deuxième élément de toit situé derrière le premier élément de toit dans l'état fermé du toit. Dans un mode de réalisation, illustré sur la figure 10 dudit document, les moyens de basculement du toit sont agencés pour que les éléments de toit soient disposés sensiblement verticalement dans une zone de rangement lorsque le toit est ouvert. Lors de l'ouverture du toit, l'élément avant passe au-dessus de l'élément arrière.

éléments de toit, entre ledit état fermé du toit dans lequel ces éléments sont disposés sensiblement horizontalement et l'état ouvert du toit, dans lequel lesdits éléments sont rangés sensiblement verticalement dans l'espace de rangement.

En particulier lorsque l'espace de rangement du toit est peu volumineux et que l'on cherche par ailleurs à faire interférer le moins possible avec l'habitacle les moyens de commande des mouvements du toit (en particulier ici les seconds moyens de basculement), la cinématique du toit et l'emplacement de ces moyens de commande doivent être astucieusement définis. Ainsi, l'invention conseille t'elle que les mouvements appliqués au toit par l'intermédiaire des premiers moyens de déplacement et des seconds moyens de basculement soient coordonnés de manière que le premier élément de toit passe sous le deuxième élément de toit, jusqu'à venir à côté de lui, pendant que les seconds moyens de basculement, liés d'un côté aux éléments de toit et d'un autre côté au bâti du véhicule, font basculer ce second élément de toit en entraînant avec lui le premier élément de toit.

Au demeurant, il est préféré dans l'invention que les seconds moyens de basculement soient disposés vers l'extrémité arrière du deuxième élément de toit, avec une articulation relative entre eux et une liaison d'entraînement (traction) vis-à-vis du premier élément de toit, par l'intermédiaire de tiges (système à glissière en particulier passant sous le deuxième élément de toit).

Ranger le toit dans son espace de rangement en suivant un rayon de courbure qui évolue en fonction de la position plus ou moins repliée de ce toit permet de loger celui-ci dans un espace particulièrement étroit dans le sens de l'axe longitudinal du véhicule.

Suivant cette approche, l'invention conseille donc que le deuxième élément de toit soit lié, vers l'arrière et de façon articulée, aux seconds moyens de basculement, ceux-ci entraînant alors, dans un mouvement par rapport au bâti du véhicule, lesdits éléments du toit suivant un déplacement curviligne, avec une concavité orientée vers une zone située à proximité du bord avant supérieur de l'espace de rangement.

Dans le cadre déjà indiqué de la cinématique des mouvements du toit, l'invention s'est particulièrement attachée à trouver un compromis entre la "fluidité" du mouvement, la non-interférence avec la zone de l'habitacle réservée aux occupants, la fiabilité de la solution mécanique retenue et un basculement qui doit être rapide et de faible amplitude pour que le toit passe de sa position fermée sensiblement horizontale à sa position repliée sensiblement verticale.

Dans ses conditions, une autre caractéristique de l'invention conseille que, latéralement, de chaque côté du toit, le deuxième élément de toit et les seconds moyens de basculement s'articulent entre eux suivant deux axes dirigés transversalement à l'axe longitudinal du véhicule, par l'intermédiaire respectivement de premiers et de seconds moyens de guidage ayant chacun une extrémité s'étendant jusqu'à une zone du bâti du véhicule située à proximité du bord avant de l'espace de rangement du toit, lesdites extrémités entre elles et lesdits axes transversaux entre eux étant respectivement décalés suivant l'axe longitudinal du véhicule, pour que le déplacement vers l'arrière et le bas du toit, induit par les moyens de guidage, provoque un décalage vertical entre le bord avant du deuxième élément de toit et le bord arrière du premier élément de toit, préalablement à une action des premiers moyens de déplacement pour amener les premier et second éléments de toit côte à côte, lors du repliement du toit.

Dans le même contexte, il est par ailleurs conseillé que:
- les seconds moyens de basculement comprennent au moins un premier et un deuxième bras,
- le premier bras est lié fixement d'un côté au premier élément de toit et est relié de façon articulée au deuxième élément de toit pour un pivotement relatif autour d'un axe transversal à l'axe longitudinal du véhicule,
- le premier bras est d'un autre côté monté articulé par rapport au bâti du véhicule, et
- le second bras est relié de façon articulé d'un côté au deuxième élément de toit et d'un autre côté au bâti du véhicule.

Tout en pouvant donc comprendre avantageusement de tels premier et second bras, les moyens de basculement du toit seront avantageusement associés, dans l'invention, à des glissières de coulissement, et ce bien qu'une solution uniquement à double bras articulés (s'étendant de préférence entre l'arrière du deuxième élément de toit et une zone avant haute de l'espace de logement) soit également décrite ci-après.

La solution à bras montés individuellement dans une double glissière est préférée à un système à double bras articulés, en ce qu'elle favorise la rapidité de basculement du toit et satisfait au mieux aux conditions d'exiguïté précitées.

A noter encore que l'invention trouve un intérêt particulier sur les véhicules à capot arrière de coffre et à moteur arrière, comprenant donc un capot arrière articulé sur le bâti et situé derrière les sièges, vers l'arrière du véhicule, pour un accès (outre éventuellement à une zone de rangement de baggages) à un moteur arrière utilisé bien sûr pour le déplacement du véhicule. Notamment dans ce cas, on rencontre des problèmes d'exiguïté, ici d'accès au moteur, voire d'accès à l'intérieur de la zone de rangement du toit replié.

D'autres caractéristiques et avantages de l'invention apparaîtront encore du complément de description qui suit, dans lequel:

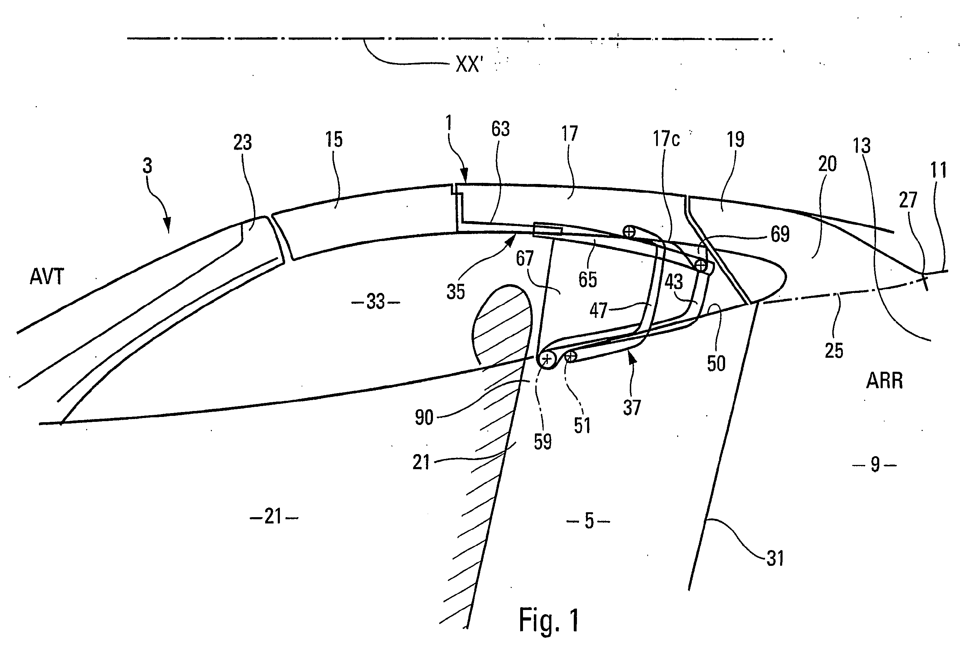

- les figures 1, 2 et 3 montrent un premier mécanisme pour rendre découvrable le véhicule, en liaison avec trois étapes successives de repliement du toit dans son espace de logement,

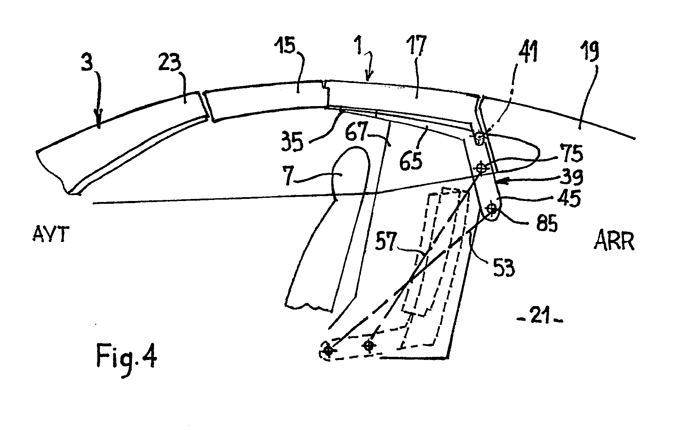

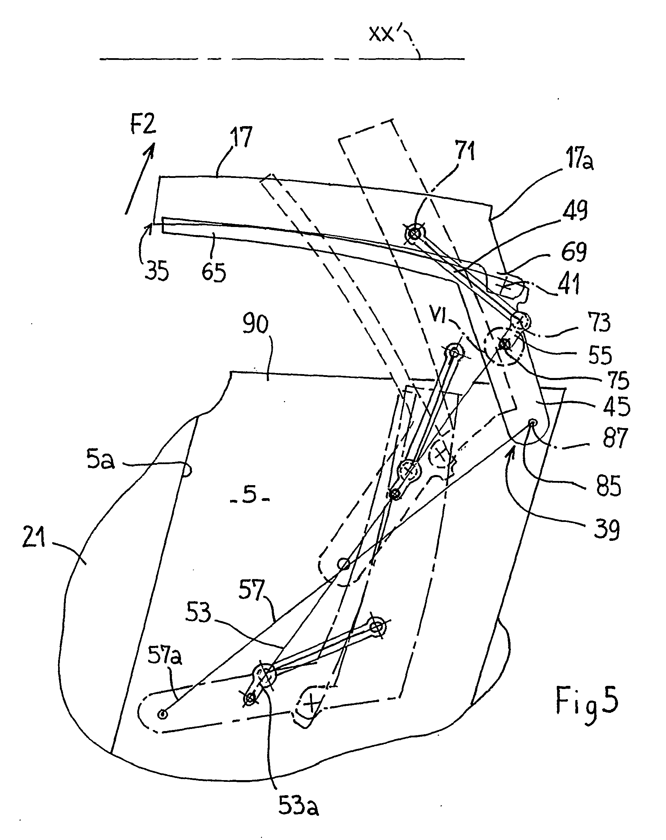

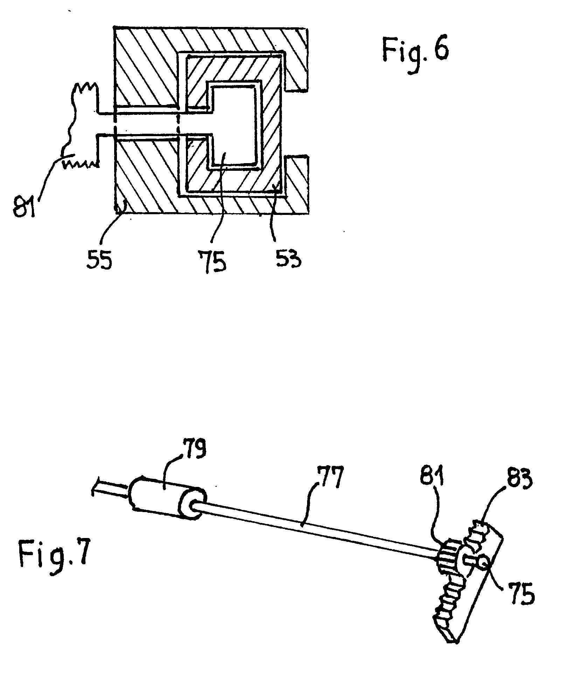

- les figures 4 à 7 font référence à un deuxième mode de réalisation se référant à un mécanisme de basculement du toit par glissières, les figures 4 et 5 schématisant la cinématique des principales pièces en mouvement, tandis que la figure 6 montre plus précisément en coupe la liaison glissante à l'endroit de la zone repérée VI sur la figure 5, et que la figure 7 schématise un possible système d'entraînement motorisé à cet endroit, pour le coulissement dans les glissières.

Les deux modes préférés de réalisation de l'invention décrits ci-après permettent donc, avec un toit 1 escamotable, de transformer un véhicule 3 de type berline ou coupé en un véhicule de type cabriolet.

Le problème rencontré sur les solutions existantes pour escamoter le toit ne permettant en général pas de loger celui-ci dans un espace 5 particulièrement réduit en particulier dans le sens de l'axe longitudinal XX' du véhicule, lorsque cet espace est interposé entre l'arrière des sièges 7 des occupants et l'avant de la zone 9 du véhicule réservée notamment au capot arrière 11 sous lequel est alors typiquement logé le moteur 13 prévu pour le déplacement du véhicule, l'invention à prévu un toit dont le mécanisme de basculement résout ces problèmes d'exiguïté.

Dans les solutions ci-dessous, les mécanismes décrits sont sensiblement symétriques par rapport au plan médian du véhicule (contenant XX'). Ainsi seule sera décrite la situation d'un côté.

Dans les deux exemples de réalisation illustrés notamment sur les figures 1 et 4, on voit que le toit 1 du véhicule comprend, de l'avant (AVT) vers l'arrière (ARR), successivement trois parties rigides 15, 17, 19. Les deux parties les plus avant 15 et 17 constituent un premier et un second éléments ou panneaux de toit, mobiles, tandis que la partie arrière 19 est fixe par rapport au bâti 21 du véhicule (on appellera "bâti" tout ce qui appartient au châssis et/ou à la carrosserie du véhicule et qui constitue des parties de support ou de référentes vis-à-vis desquelles le toit 1 est mobile).

Ainsi, les deux éléments 17, 19 du toit 1 sont elles, dans cet exemple, interposées entre, à l'avant, la baie de pare-brise 23 et, à l'arrière, la partie fixe 19 qui intègre les montants latéraux 20 "de custode" lesquels bordent une lunette arrière que l'on ne voit pas sur les figures et qui s'étend donc entre ces montants.

Les deux éléments mobiles 15, 17 du toit 1 sont donc sensiblement plans et disposés sensiblement horizontalement dans l'état fermé du toit illustré sur la figure 1.

A noter que la partie mobile arrière 17 du toit pourrait toutefois se prolonger encore plus à l'arrière et intégrer avec elle la partie 19, de sorte que cet élément arrière, monté basculant, s'étendrait, alors jusqu'en zone figurée 25, 27 sur la figure 1. Bien entendu, la limite arrière ici figurée en 31 (sensiblement au droit de la partie avant de l'élément 19 du toit) se prolongerait dans ce cas à l'arrière sensiblement jusqu'au droit du point 27.

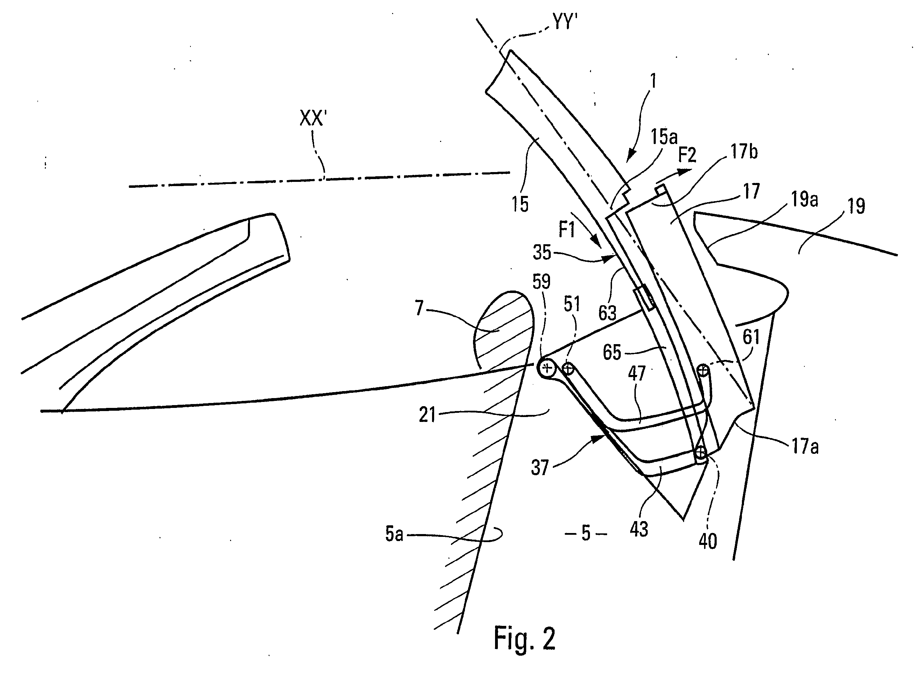

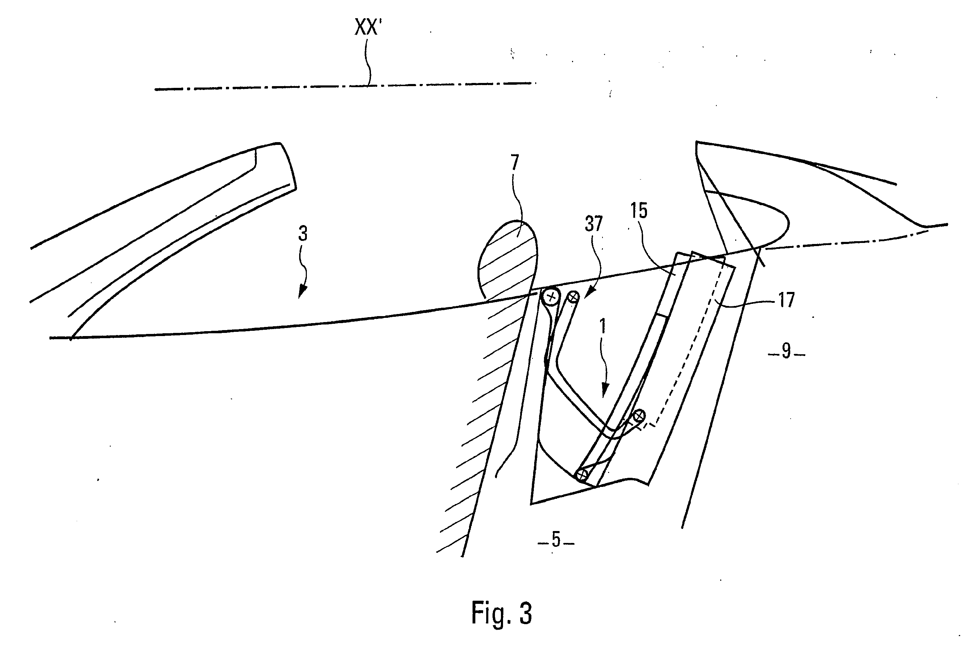

Pour son basculement entre son état fermé au dessus de l'habitacle 33 (figures 1 et 4) et son état replié, escamoté dans son espace de rangement 5 (figure 3 et 5 ; traits mixtes) les éléments mobiles 15, 17 du toit sont guidés et commandés dans leurs mouvements par des premiers moyens de déplacement 35 et des seconds moyens de basculement (37 sur les figures 1 à 3 et 39 sur les figures 4 et 5). Respectivement, ces moyens sont prévus pour amener les premier et second éléments de toit côte à côte, lors de l'ouverture du toit (voir figures 2 et 5) et pour les faire basculer entre les états fermé et ouvert, avec pour effet, dans ce dernier cas, que ces éléments sont disposés sensiblement verticalement dans l'espace de rangement 5.

Dans l'espace 5, les deux éléments 15, 17 sont disposés côte à côte (l'un derrière l'autre). Pour cela, on a préféré que lors du repliement du toit, l'élément avant 15 passe sous l'élément arrière 17 (flèche F1 sur la figure 2) consécutivement à un décalage vertical entre eux (flèche F2). Ce mouvement de décalage entre le bord arrière de l'élément avant 15 et le bord avant de l'élément arrière 17 est obtenu, dans les deux exemples de réalisation, par un montage articulé de l'élément arrière de toit 17 (en 40 sur la figure 2 et en 41 sur la figure 5) vis-à-vis d'un bras (43, 45) relié d'une part à l'élément avant de toit 15 et d'autre part au châssis 21, et par la présence complémentaire d'un deuxième bras (47 sur la figure 2 et 49 sur la figure 5) monté articulé d'un côté sur l'élément 17 et de l'autre à nouveau vis-à-vis du châssis 21 (articulation "directe" à l'endroit de l'axe transversal 51 pour la solution de la figure 2 et articulation indirecte par l'intermédiaire en particulier de la glissière inclinée 53 dans laquelle le bras 49 est entraîné par l'intermédiaire, si nécessaire, de la tige 55, sur la figure 5).

Dans les deux exemples de réalisation, on remarquera que l'effet combiné de décalage suivant F2 et de basculement des éléments de toit s'opère d'autant plus efficacement que les moyens de basculement 37, 39 s'articulent d'un côté vers l'arrière de l'élément de toit arrière 17 et, de l'autre, vers le bord avant 5a de l'espace de rangement 5 (partie haute de ce bord dans la première réalisation et partie basse dans la deuxième consistant dans les extrémités 53a, 57a des deux glissières 53 et 57).

Toujours en liaison avec ce basculement doublé du décalage des éléments de toit suivant la direction F2, on remarquera sur la figure 2 la position avancée, à l'endroit de l'articulation sur le châssis, de l'axe de rotation 59 du bras arrière 43 par rapport à l'axe de rotation 51 du bras avant 47 (dont les axes de rotation 40, 61 sur l'élément 17 s'inversent d'ailleurs). Sur la figure 5, on retrouve le même décalage suivant l'axe longitudinal XX' pour les extrémités de fin de course du bras 49 dans les glissières 53 et 57.

Utiliser de tels moyens de guidage "double" (double bras 43, 47 sur la figure 2 et système à double glissière 53, 57 guidant les bras 45 et 49 sur la figure 5) permet de guider efficacement et de manière précise les éléments mobiles du toit dans leur basculement serré entre la position horizontale fermée et la position verticale repliée.

En relation avec ce basculement particulièrement serré, on remarquera la forme relativement effilée, "en sifflet", du bord arrière 17a de l'élément arrière 17, cette forme étant complémentaire de celle du bord avant 19a de la partie 19 du bâti du véhicule. Plus précisément, il s'agit ici d'une forme effilée, biseautée vers l'arrière et vers le bas pour faciliter le basculement dans la même direction de l'élément 17, lors du repliement du toit.

Au niveau de la liaison entre les bords respectivement arrière 15a et avant 17b des éléments 15, 17, une telle forme ne paraît pas impérative, dés lors que le basculement suivant F2 s'effectue sensiblement perpendiculairement à la direction générale YY' de glissement des éléments 15, 17 l'un par rapport à l'autre.

Sur les figures, ce mouvement relatif entre les deux éléments mobiles de toit 15, 17, suivant la direction YY', est réalisée par l'intermédiaire d'un barreau 63 (coulisseau) prolongeant l'élément avant de toit 15 sensiblement suivant XX' (lorsque le toit est fermé comme sur la figure 1), en liaison avec une glissière coopérante 65 s'étendant sensiblement suivant la même direction, dans le même état du toit.

En pratique, l'orientation des organes 63, 65 et leur courbure seront fonction de la ligne du véhicule (en particulier de celle de sa zone de toit) et des parties environnantes telles que 19 et 23.

Toujours dans l'état fermé du toit, le coulisseau 63, qui est lié fixement à l'élément 15, le prolonge à l'arrière, sous l'élément 17 où il s'engage dans la glissière 65 laquelle est, vers l'arrière de cet élément 17, prolongé (ou lié rigidement) soit au bras 43 (premier mode de réalisation), soit au bras 45 (deuxième mode de réalisation).

Un tel système à coulisseau/glissière combiné aux moyens de basculement précités 37 ou 39 disposés pour incliner l'élément arrière 17 par rapport à l'élément avant de toit 15 dès le début de la phase d'ouverture du toit, favorise, en liaison avec les formes précitées 17a, 19a le basculement rapide vers l'arrière et le bas de l'élément 17, lors de l'ouverture du toit. Dans cet exemple, les pièces 63, 65 jouent le rôle de tiges (ou organe) de traction grâce auxquelles (auquel) le basculement de l'élément de toit arrière 17 sous l'action des moyens de basculement 37 entraîne celui de l'élément avant 15.

Avant de présenter le mouvement d'ouverture du toit dans le cadre du premier mode de réalisation des figures 1 à 3, on notera que dans cette réalisation, les moyens de basculement 37 n'empiètent pratiquement pas dans l'espace de rangement 5, puisque dans la position fermée de la figure 1, ils dessinent, pour le bras arrière 43 lié fixement à l'extrémité arrière de la glissière rectiligne 65, une forme en "L" basculée vers la gauche, et, pour le second bras articulé 47, une forme en "C" également basculée vers la gauche, avec donc pour chacun un brin inférieur sensiblement horizontal et articulé au bâti 21, respectivement en 51 et 59, près de la bordure haute de ce bâti, c'est-à-dire à proximité de la limite supérieure haute 5b de l'espace 5, limite à partir de laquelle peut typiquement se dresser une vitre de custode arrière 67. A cet égard, cette vitre peut indifféremment, dans le cadre du mouvement d'ouverture/fermeture du toit 1, soit être montée pivotante avec les moyens de basculement 37 (par exemple en étant articulée suivant l'axe transversal 59), soit descendre en s'escmotant verticalement dans le bâti.

A noter également que les axes d'articulation des bras pivotants 43, 47 (en 40, 51, 59 et 61) sont transversaux (plus précisément perpendiculaires) à l'axe longitudinal XX' du véhicule.

Le bras 43 (bras arrière en l'espèce) est de préférence positionné et conformé pour jouer le rôle de bras moteur, c'est-à-dire que c'est lui qui initie le basculement d'ouverture du toit. C'est au niveau de son axe d'articulation 40 que l'élément arrière de toit 17 est d'ailleurs ici monté articulé, via une excroissance 69 située à l'extrémité arrière basse de l'élément 17 et le prolongeant sensiblement verticalement (figure 1).

Le point d'articulation 61 est situé légèrement plus à l'avant et plus haut, directement sur l'élément 17.

Le montage et la forme du second bras 47 font qu'il est alors le bras suiveur et que c'est en particulier par son intermédiaire que l'élément arrière de toit 17 s'incline suivant F2 pour laisser passer l'élément avant 15.

Ainsi, lorsque les éléments 15, 17 de toit basculent vers l'arrière, pour passer de la position fermée de la figure 1 à la position ouverte de la figure 3, le bras 43 entraîne la glissière 65 vers l'arrière et la bas par pivotement du bras autour de l'axe transversal 59. Le bras coudé 47 bascule alors également vers l'arrière, entraînant le basculement de l'élément arrière de toit 17 vers le haut (flèche F2), par pivotement autour de l'axe 61, permettant ainsi au coulisseau 63 suivi de l'élément 15 de glisser sous la poutre de l'élément arrière 17, le long de la glissière 65.

L'entier passage de l'élément 15 dessous/devant l'élément arrière 17, qui débute donc après que le toit 1 a commencé à basculé autour des axes 51 et 59, et qui se poursuit comme on le voit sur la figure 2, est terminé lorsque le toit arrive dans sa position rangée de la figure 3, position dans laquelle les deux éléments 15, 17 sont donc côte à côte, l'élément 15 se logeant dans la relative concavité tournée vers l'avant de l'élément 17, devant lui.

Lorsque les éléments arrivent dans cette position totalement repliée du toit à l'intérieur de l'espace 5, l'élément 17 est revenu dans sa position normale "non inclinée" qu'il occupe lorsqu'il est aligné avec l'élément avant 15, évitant ainsi que son extrémité supérieure occupe trop de place vers l'arrière.

Pour assurer le mouvement des premiers et seconds moyens de guidage 43, 47, ainsi que pour le passage de l'élément de toit 15 sous l'élément 17, des moyens d'entraînement connus peuvent être utilisés, tels que des vérins ou des moteurs électriques (non représentés).

Si l'on s'intéresse maintenant plus précisément au deuxième mode de réalisation des figures 4 et suivantes, on constate que le bras 45 lié à l'élément de toit avant 15 prolonge rigidement, à l'arrière et de façon coudée vers le bas, la glissière 65 dans l'état fermé du toit de la figure 4.

Quant à l'articulation suivant l'axe transversal 41 de l'élément 17 vis-à-vis de ce bras 45, elle s'opère à l'extrémité arrière de la glissière 65 tout à fait en haut du bras 45, à l'endroit d'une excroissance 69, comme dans le cas de la figure 1.

Au demeurant, l'articulation du même élément 17 vis-à-vis du bras 49 (figure 5) s'opère également comme dans le cas du premier mode de réalisation, c'est-à-dire en partie arrière de l'élément 17, l'axe transversal 71 (perpendiculaire donc à XX') autour duquel le bras 49 est donc monté pivotant sur l'élément 17 étant situé plus à l'avant et de préférence légèrement plus haut que l'axe transversal 41, pour que ce second bras 49 constitue (à l'image de 47 vis-à-vis de 43) le bras suiveur vis-à-vis du bras meneur 45, lors de l'ouverture du toit.

Compte-tenu des formes des pièces en cause et de la cinématique concernée, le bras 49 qui va donc en particulier servir à basculer l'élément 17 pour le passage sous lui de l'élément 15, est couplé à la tige 55, ceci via une articulation intermédiaire sur un axe transversal 73, la tige 55 coulissant le long de la glissière 53, par l'intermédiaire d'un pion 75, comme on peut le voir sur la figure 6.

A partir de cette figure et de la figure 7, on notera d'ailleurs que ce pion 75 traverse ici la tige 55 (avec un léger jeu pour permettre le libre mouvement de ma tige 55 lors de son déplacement le long de 53) et est situé à une extrémité d'un arbre transversal 77 (perpendiculaire à l'axe XX') lequel, mu par un moteur 79, entraîne un pignon 81 interposé entre l'arbre et le pion 75 et engrénant avec une crémaillère 83, pour donc assurer le déplacement dans un sens et dans l'autre le long de la glissière 53.

Un entraînement comparable peut être prévu à l'endroit du pion 85 qui peut librement se déplacer à l'intérieur de l'autre glissière 57 et qui est monté vers l'extrémité libre du bras 45, suivant un axe 87 perpendiculaire à XX'.

Notamment sur la figure 5, on remarquera que, du haut vers le bas du bras 45, on trouve successivement les axes ou pions d'articulation 41, 75 et 85, tout trois sensiblement alignés suivant la direction générale d'allongement de ce bras (proche de la verticale dans la position fermée du toit). Ainsi, le pion 85 par lequel le bras meneur 45 va initier le basculement du toit, est situé plus bas et plus à l'arrière que le pion 75 du bras suiveur 49.

Les deux glissière 53 et 57 sont rectilignes, inclinées (en l'espèce suivant des angles différents) et s'étendent entre l'extrémité arrière haute de l'espace de rangement 5 (voir depuis légèrement au-dessus de cet espace), en direction d'une zone située vers la partie avant basse de l'espace.

Conjuguée à la forme des pièces (en particulier des éléments de toit et du bras 45), la position longitudinalement décalée (suivant l'axe XX') des extrémités avant basses 53a et 57a des deux glissières favorise un basculement court et un positionnement rapidement vertical des éléments de toit (trait mixte sur la figure 5).

Sur cette figure 6, on aura également noté l'intérêt de l'articulation 73 du bras 49 qui, dans cette réalisation, définit donc une bielle à deux tiges articulées entre elles, la position relative de ces deux tiges évoluant au fur et à mesure du mouvement de repliement du toit (bien entendu, il en est de même lors du mouvement inverse de sortie du toit, lorsque l'on souhaite le refermer au dessus de l'habitacle).

On peut également noter que lors du repliement, le glissement du bras 45 le long des deux glissières 53, 57 entraîne le déplacement du bras 49 vers le bas, ce qui, en conjugaison avec l'articulation 41, provoque l'inclinaison de l'élément 17 suivant F2, ceci concomitamment au basculement vers le bas et vers l'arrière des deux éléments 15, 17, l'élément 15 étant ici entraîné par les organes intermédiaires 63, 65 prévus dans ce mode de réalisation comme dans le premier.

Toujours sur la figure 5, on peut constater qu'a nouveau le mécanisme à été prévu pour qu'en position verticale du toit complètement rangé à l'intérieur de l'espace 5, les deux éléments 15, 17 soient juste l'un derrière l'autre, l'élément 17 arrière ayant retrouvé sa position "normale" non inclinée.

De ce qui précède et des illustrations, on aura compris que dans les deux exemples de réalisation illustrés, les moyens de basculement 37, 39 communiquent aux éléments mobiles de toit 15, 17 un mouvement curviligne évoluant sensiblement entre la verticale et l'horizontale, avec une concavité orientée vers une zone 90 située globalement à proximité de la partie supérieure avant de l'espace de rangement 5, permettant ainsi d'atteindre au mieux le rangement compact recherché.

On aura également noté l'encombrement latéral et axial (suivant XX') réduit des moyens de basculement 37, 39 dont les organes constitutifs sont avantageusement situés à proximité immédiate des parois latérales du bâti où ils s'articulent, ceci de préférence dans l'encombrement de l'espace 5 dans le sens de l'axe XX', c'est-à-dire très à l'arrière du second élément de toit 17, uniquement entre l'arrière des sièges 7 et l'avant de la zone 9 qui peut ainsi être totalement réservée au logement du moteur

## Revendications

1. Véhicule découvrable présentant un axe longitudinal, un avant et un arrière, et comprenant :
- un bâti (21),
- un habitacle (33) équipé de sièges (7),
- un toit rigide escamotable(1), mobile entre un état fermé au-dessus de l'habitacle et un état ouvert dans lequel le toit est rangé derrière lesdits sièges, le toit comprenant un premier élément de toit (15) et un deuxième élément de toit (17) situé derrière le premier élément de toit, dans l'état fermé du toit,
- des premiers moyens (35) de déplacement pour amener les premier et second éléments de toit côte à côte, lors de l'ouverture du toit,
- et des seconds moyens (37,39) de basculement pour déplacer en les basculant les premier et second éléments de toit (15,17), entre ledit état fermé du toit, dans lequel ces éléments sont disposés sensiblement horizontalement et l'état ouvert du toit, dans lequel lesdits éléments sont rangés sensiblement verticalement dans l'espace de rangement,
ledit véhicule étant **caractérisé en ce qu'**il comprend
- un espace (5) de rangement du toit dans son état ouvert, l'espace étant situé entre les sièges et le capot arrière du véhicule,
- un capot arrière (11) articulé sur le bâti et situé derrière les sièges, vers l'arrière du véhicule, pour un accès à un logement pour des bagages ou à un moteur pour le déplacement du véhicule,
**en ce que** les mouvements appliqués au toit par l'intermédiaire des premiers moyens de déplacement (35) et des seconds moyens de basculement (37, 39) sont coordonnés de manière que le premier élément de toit passe sous le deuxième élément de toit, en utilisant des moyens d'entraînement, jusqu'à venir à côté de lui, pendant que les seconds moyens de basculement, liés aux éléments de toit et d'un autre côté au bâti du véhicule, font basculer le second élément de toit en entraînant avec lui le premier élément de toit, par l'intermédiaire des dits premiers moyens de déplacement qui relient entre eux les premier et second éléments de toit,
et **en ce que** :
- les premiers moyens de déplacement comprennent un coulisseau (63) prolongeant l'élément avant de toit, et solidaire du premier élément de toit (15) et monté coulissant dans une glissière (65),
- les seconds moyens de basculement comprennent au moins un premier et un deuxième bras (43,47;45,49),
- le premier bras (43,45) est lié fixement à l'extrémité arrière de la glissière (65) et est relié de façon articulée au deuxième élément (17) de toit pour un pivotement relatif autour d'un axe transversal à l'axe longitudinal du véhicule,
- le premier bras est d'un autre côté monté articulé par rapport au bâti (21) du véhicule, et
- le second bras (47,49) est relié de façon articulée d'un côté au deuxième élément (17) de toit et d'un autre côté au bâti du véhicule.

2. Véhicule selon la revendication 1, **caractérisé en ce que** les seconds moyens de basculement (37, 39) sont liés au toit vers l'extrémité arrière du deuxième élément de toit (17), et sont reliés au premier élément de toit par l'intermédiaire de tiges (63, 65) appartenant aux moyens de déplacement (35).

3. Véhicule selon l'une quelconque des revendications précédentes, **caractérisé en ce que** le deuxième élément de toit (17) est lié, vers l'arrière et de façon articulée, aux seconds moyens de basculement (37, 39), lesquels, dans un mouvement par rapport au bâti (21) du véhicule, entraînent lesdits éléments du toit suivant un déplacement curviligne, avec une concavité orientée vers une zone (90) située à proximité du bord avant supérieur de l'espace de rangement (5).

4. Véhicule selon l'une quelconque des revendications précédentes, **caractérisé en ce que**, latéralement, de chaque côté du toit (1), le deuxième élément de toit (17) et les seconds moyens de basculement (37, 39) s'articulent entre eux suivant deux axes (40,61;41,71) dirigés transversalement à l'axe longitudinal XX') du véhicule, par l'intermédiaire respectivement de premiers et de seconds moyens de guidage (43,47;53,57) ayant chacun une extrémité s'étendant jusqu'à une zone du bâti du véhicule située à proximité du bord avant (5a) de l'espace (5) de rangement du toit, lesdites extrémités entre elles et lesdits axes transversaux entre eux étant respectivement décalés suivant l'axe longitudinal du véhicule, pour que le déplacement vers l'arrière et le bas du toit (1), induit par le déplacement des moyens de guidage (43,47;53,57) provoque un décalage vertical entre le bord avant (17b) du deuxième élément de toit et le bord arrière (15a) du premier élément de toit, préalablement à une action des premiers moyens de déplacement (35) pour amener les premier et second éléments de toit côte à côte, lors du repliement du toit.

5. Véhicule selon l'une quelconque des revendications précédentes, **caractérisé en ce que** les seconds moyens de basculement (37, 39) sont liés au deuxième élément de toit (17) et agissent sur lui pour le faire basculer en le déplaçant vers l'arrière et le bas, lors du repliement du toit, tout en surélevant, lors de ce basculement, le bord avant (17b) de ce second élément de toit par rapport au bord arrière du premier élément (15), ceci sur une hauteur suffisante pour permettre au premier élément de toit de passer sous le second élément de toit, via les premiers moyens de déplacement (35).

6. Véhicule selon la revendication 1, **caractérisé en ce que** le premier bras (45) est monté glissant, de façon articulée, dans deux glissières (53,57) inclinées liées au bâti (21) du véhicule et s'étendant de façon inclinée par rapport à la verticale, entre des zones situées respectivement à proximité des bords avant et arrière de l'espace de rangement (5), le deuxième bras étant une bielle (49) montée articulée sur l'une desdites autres glissières (53), à l'endroit de l'une desdites liaisons articulées du premier bras (45) avec cette glissière, la bielle étant par ailleurs montée articulée sur le deuxième élément de toit (17), de manière que le déplacement du premier bras (45) le long des glissières (53,57), entraîne celui de la bielle (49) et provoque le basculement vers le bas et vers l'arrière du deuxième élément de toit, avec une élévation au moins du bord avant (17b) de ce deuxième élément par rapport au bord arrière (15a) du premier élément de toit.

7. Véhicule selon la revendication 6, **caractérisé en ce que** ladite bielle comprend deux tiges (49,55) articulées entre elles autour d'une direction transversale à l'axe longitudinal (XX') du véhicule.

8. Véhicule selon l'une des revendications 1 à 5, **caractérisé en ce que** le premier et le second bras (43, 47) sont coudés et décalés l'un par rapport à l'autre suivant ledit axe longitudinal (XX') du véhicule et liés de façon articulée d'un côté au deuxième élément de toit (17) et d'un autre côté au bâti (21) du véhicule, l'un desdits bras (43) étant en outre relié au premier élément de toit (15) pour, lors du repliement du toit, basculer vers le bas et vers l'arrière le deuxième élément de toit (17) qui entraîne avec lui le premier élément de toit auquel il est donc lié et provoquer alors une élévation au moins du bord avant (17b) de ce second élément de toit, préalablement au déplacement relatif des dits premier et second éléments de toit pour les amener côte à côte.

9. Véhicule selon la revendication 8 **caractérisé en ce que** latéralement, de chaque côté du toit, l'un desdits bras (43) qui est moteur pour le basculement vers l'arrière et le bas du second élément de toit (17) est lié à cet élément plus à l'arrière que ne l'est le second bras (47) lequel est lié au bâti (21) du véhicule plus à l'arrière que ne l'est le premier bras, les liaisons des premier et second bras au bâti du véhicule étant situées vers le haut et l'avant de l'espace de rangement (5).

10. Véhicule selon l'une quelconque des revendications précédentes, **caractérisé en ce que** les premier et second éléments de toit sont interposés entre une baie de pare-brise (23), à l'avant, et une partie arrière (19) de toit, fixe par rapport au bâti (21) du véhicule et comprenant des montants latéraux bordant une lunette arrière, le second élément de toit présentant un bord arrière (17a) s'étendant de biais par rapport à la verticale, suivant une forme sensiblement complémentaire de celle du bord avant (19a) de la partie arrière fixe du toit, favorisant le basculement de ce second élément de toit vers l'arrière et le bas, lors de l'ouverture du toit.

## Claims

1. A convertible vehicle having a longitudinal axis, a front and a rear, and comprising:
- a frame (21)
- a passenger compartment (33) fitted with seats (7),
- a rigid, retractable roof (1), which can be moved between a closed position over the passenger compartment and an open position in which the roof is stowed behind said seats, the roof comprising a first roof element (15) and a second roof element (17) located behind said first roof element, in the closed position of the roof,
- first displacement means (35) for bringing the first and second roof elements into a side-by-side position, when the roof is opened,
- and second tilting means (37, 39) for displacing the first and second roof elements (15, 17) by tilting them, between said closed position of the roof, in which said elements are disposed substantially horizontally, and the open position of the roof, in which said elements are stowed substantially vertically in the storage space, said vehicle being **characterized in that** it includes:
- a space (5) for stowing the roof in its open position, the space being located between the seats and the rear cover of the vehicle,
- a rear cover (11) articulated to the frame and located behind the seats, towards the rear of the vehicle, for access to a space for luggage or to an engine for driving the vehicle,
**in that** the movements applied to the roof through the intermediary of the first displacement means (35) and second tilting means (37, 39) are coordinated in such a way that the first roof element passes underneath the second roof element, using entrainment means, until it arrives alongside it, whilst the second tilting means, attached to the roof elements and attached at the other side to the frame of the vehicle, tilt the second roof element, carrying along with it the first roof element, through the intermediary of said first displacement means which join together the first and second roof elements,
and **in that**
- the first displacement means comprise a slide (63) extending the front roof element, and firmly attached to the first roof element (15) and fixed so as to slide in a guideway (65),
- the second tilting means comprise at least a first and a second arm (43, 47; 45, 49),
- the first arm (43, 45) is firmly fixed to the rear end of the guideway (65) and is articulated to the second roof element (17) to allow a relative pivoting movement about an axis transverse to the longitudinal axis of the vehicle, at the other side, the first arm is articulated to the frame (21) of the vehicle, and
- the second arm (47, 49) is articulated at one side to the second roof element (17) and at the other side to the frame of the vehicle.

2. A vehicle according to Claim 1, **characterized in that** the second tilting means (37, 39) are attached to the roof towards the rear end of the second roof element (17), and are attached to the first roof element through the intermediary of rods (63, 65) forming part of the displacement means (35).

3. A vehicle according to any one of the preceding claims, **characterized in that** the second roof element (17) is articulated, towards the rear, to the second tilting means (37, 39), which, in a movement relative to the frame (21) of the vehicle, drive said roof elements along a curvilinear path, with a concave side oriented towards an area (90) located in the vicinity of the upper front edge of the storage space (5).

4. A vehicle according to any one of the preceding claims, **characterized in that**, laterally, on each side of the roof (1), the second roof element (17) and the second tilting means (37, 39) are articulated together along two axes (40, 67; 41, 71) oriented transverse to the longitudinal axis (XX') of the vehicle, through the intermediary of the first and second guide means (43, 47; 53, 57) respectively, each having one end extending into an area of the frame of the vehicle located close to the front edge (5a) of the space (5) for stowing the roof, said ends and said transverse axes respectively being offset from one another along the longitudinal axis of the vehicle so that the rearward and downward displacement of the roof (1), as a result of the displacement of the guide means (43, 47; 53, 57), brings about a vertical offset between the front edge (17b) of the second roof element and the rear edge (15a) of the first roof element, prior to the first displacement means (35) acting to bring the first and second roof elements into a side-by-side position, when the roof is folded back.

5. A vehicle according to any one of the preceding claims, **characterized in that** the second tilting means (37, 39) are attached to the second roof element (17) and act upon it to tilt it by displacing it towards the rear and downwards, when the roof is folded back, and at the same time as this tilting action raising the front edge (17b) of said second roof element relative to the rear edge of the first element (15) to such a height as to allow the first roof element to pass underneath the second roof element, via the first displacement means (3 5).

6. A vehicle according to Claim 1, **characterized in that** the first arm (45) is articulated to slide in two inclined guideways (53, 57) attached to the frame (21) of the vehicle and extending at an angle relative to the vertical, between areas located close to the front and rear edges respectively of the storage space (5), the second arm being a connecting rod (49) articulated onto one of said other guideways (53), at the location of one of said articulated connections of the first arm (45) with said guideway, the connecting rod also being articulated to the second roof element (17) in such a way that the displacement of the first arm (45) along the guideways (53, 57) results in displacement of the connecting rod (49) and produces the downward and rearward tilting of the second roof element, together with raising of at least the front edge (17b) of said second element relative to the rear edge (15a) of the first roof element.

7. A vehicle according to Claim 6, **characterized in that** said connecting rod comprises two rods (49, 55) articulated together about a direction transverse to the longitudinal axis (XX') of the vehicle.

8. A vehicle according to one of Claims 1 to 5, **characterized in that** the first and the second arms (43, 47) are bent at an angle and offset relative to one another along said longitudinal axis (XX') of the vehicle and articulated at one side to the second roof element (17) and at the other side to the frame (21) of the vehicle, one of said arms (43) also being attached to the first roof element (15) for producing, when the roof is folded back, a downward and rearward tilting of the second roof element (17), which carries along with it the first roof element to which it is thus connected, and consequently raising at least the front edge (17b) of said second roof element, prior to the relative displacement of said first and second roof elements to bring them into a side-by-side position.

9. A vehicle according to Claim 8, **characterized in that**, laterally, on each side of the roof, one of said arms (43), which is the driving force for the rearward and downward tilting of the second roof element (17), is attached to said element further towards the rear than the second arm (47), which is attached to the frame (21) of the vehicle further towards the rear than the first arm, the connections of the first and second arms to the frame of the vehicle being located towards the top and front of the storage space (5).

10. A vehicle according to any one of the preceding claims, **characterized in that** the first and second roof elements are interposed between a windscreen frame (23), at the front, and a rear roof portion (19), fixed relative to the frame (21) of the vehicle and comprising lateral uprights bordering a rear window, the second roof element having a rear edge (17a) extending at an angle relative to the vertical, in a shape substantially corresponding to that of the front edge (19a) of the rear fixed portion of the roof, facilitating the rearward and downward tilting of said second roof clement, when the roof is opened.

## Patentansprüche

1. Aufdeckbares Fahrzeug mit einer Längsachse, einer Vorderseite und einer Rückseite, umfassend:
- einen Körper (21),
- eine mit Sitzen (7) ausgestattete Fahrgastzelle (33),
- ein starres, versenkbares Dach (1), das zwischen einem geschlossenen Zustand über der Fahrgastzelle und einem offenen Zustand beweglich ist, in dem das Dach hinter den Sitzen verstaut ist, wobei das Dach einen ersten Dachteil (15) und einen zweiten Dachteil (17) umfasst, welcher im geschlossen Zustand des Daches hinter dem ersten Dachteil angeordnet ist,
- erste Verlagerungseinrichtungen (35), um den ersten und zweiten Dachteil beim Öffnen des Daches nebeneinander anzuordnen
- und zweite Schwenkeinrichtungen (37, 39), um den ersten und zweiten Dachteil (15, 17) zwischen dem geschlossenen Zustand des Daches, in dem die Teile im wesentlichen horizontal angeordnet sind, und dem offenen Zustand des Daches, in dem die Teile im wesentlichen vertikal im Stauraum verstaut sind, schwenkend zu verlagem, wobei das Fahrzeug **dadurch gekennzeichnet ist, dass** es umfasst:
- einen Stauraum (5) für das Dach in dessen geöffnetem Zustand, der sich zwischen den Sitzen und der Heckhaube des Fahrzeugs befindet,
- eine auf dem Körper angelenkt Heckhaube (11), die hinter den Sitzen, in Richtung der Fahrzeugrückscite angeordnet ist für einen Zugang zu einer Gepäclcaufnahme oder zu einem Motor zur Fortbewegung des Fahrzeuges,
dass die durch die ersten Verlagerungseinrichtungen (35) und die zweiten Schwenkeinrichtungen (37, 39) an dem Dach ausgeführten Bewegungen so abgestimmt sind, dass der erste Dachteil unter Verwendung von Antriebsmilteln unter den zweiten Dachteil verfährt bis er neben diesen gelangt, während die zweiten Schwenkeinrichtungen, die mit den Dachteilen und an einer anderen Seite mit dem Fahrzeugkörper verbunden sind, den zweiten Dachteil zum Schwenken bringen und dabei mittels der ersten Verlagerungseinrichiungen, welche den ersten und zweiten Dachteil miteinander verbinden, den ersten Dachteil mit dem zweiten mitnehmen,
und dass:
- die ersten Verlagerungseinrichtungcn einen Schieber (63) umfassen, der den vorderen Dachteil verlängert, einstückig mit dem ersten Dachteil (15) verbunden ist und gleitend in einer Führungsschiene (65) gelagert ist,
die zweiten Schwenkeinrichtungen mindestens einen ersten und einen zweiten Arm (43, 47; 45, 49) umfassen,
- der erste Arm (42, 45) ortsfest mit dem hinteren Ende der Führungsschiene (65) und gelenkig mit dem zweiten Dachteil (17) verbunden ist, um ein relatives Schwenken um eine Achse zu ermöglichen, welche quer zur Fahrzeuglängsachse steht,
- der erste Arm an einem anderen Ende gelenkig in bezug auf den Fahrzeugkörper (21) gelagert ist,
- der zweite Arm (47, 49) mit einem Ende am zweiten Dachteil (17) und mit einem anderen Ende am Fahrzeugkörper angelenkt ist.

2. Fahrzeug nach Anspruch 1, **dadurch gekennzeichnet, dass** die zweiten Schwenkeinrichtungen (37, 39) mit dem Dach am hinteren Ende des zweiten Dachteils (17) verbunden sind und über die Stangen (63, 65), die Teil der Verlagerungseinrichtungen (35) sind, mit dem ersten Dachteil verbunden sind.

3. Fahrzeug nach einem der vorstehenden Ansprüche, **dadurch gekennzeichnet, dass** das zweite Dachteil (17) hinten gelenkig mit den zweiten Schwenkeinrichtungen (37, 39) verbunden ist, die in einer Bewegung gegenüber dem Fahrzeugkörper die Dachteile entlang einer Kurvenlinie mitnehmen, welche eine zu einem Bereich (90) in der Nähe der oberen Vorderkante des Stauraumes (5) hin gerichtete Einbuchtung aufweist.

4. Fahrzeug nach einem der vorstehenden Ansprüche, **dadurch gekennzeichnet, dass** seitlich auf jeder Seite des Daches (1) das zweite Dachteil (17) und die zweiten Schwcnkeinrichtungen (37, 39) sich zueinander gemäß zweier quer zur Fahrzeuglängsachse (XX') verlaufenden Achsen (40, 61; 41, 71) jeweils mittels der ersten und zweiten Führungseinrichtungen (43, 47; 53, 57) gelenkig bewegen, von den jede ein Ende hat, das sich bis zu einem Bereich des Fahrzeugkörpers in der Nähe der Vorderkante (5a) des Stauraums (5) des Daches erstreckt, wobei die Enden und die Querachsen jeweils gemäß der Fahrzeuglängsachse zueinander versetzt sind, damit beim Zurückklappen des Daches die Verlagerung zum hinteren, unteren Bereich des Daches (1) hin, welche durch die Verlagerung der Führungseinrichtungen (43, 47; 53, 57) hervorgerufen wird, einen vertikalen Versatz zwischen der Vorderkante (17b) des zweiten Dachteils und der Hinterkante (15a) des ersten Dachteils hervorruft, was zeitlich vor einer Bewegung der ersten Verlagerungseinrichtungen (35) zum Anordnen des ersten und zweiten Dachteils nebeneinander erfolgt.

5. Fahrzeug nach einem der vorstehenden Ansprüche, **dadurch gekennzeichnet, dass** die zweiten Schwenkeinrichtungen (37, 39) mit dem zweiten Dachteil (17) verbunden sind und auf dieses einwirken, um es beim Zurückklappen des Daches zu schwenken und dabei nach hinten und unten zu verlagern und dabei die Vorderkante (17b) des zweiten Dachteils wähnend des Schwenkens in bezug auf die Hinterkante des ersten Teils (15) um eine Höhe anzuheben, die ausreicht, um das erste Dachteil mittels der ersten Verlagerungseinrichtungen (35) unter das zweite Dachteil gelangen zu lassen.

6. Fahrzeug nach Anspruch 1, dadurch gekenzeichnet, dass der erste Arm (45) gleitend in zwei geneigten, mit dem Fahrzeugkörper (12) verbundenen Führungsschienen (53, 57), angelenkt ist und sich geneigt zwischen den jeweiligen Bereichen in der Nähe des vorderen und hinteren Randes des Stauraumes (5) erstreckt, wobei der zweite Ann eine Schubstange (49) ist, die auf einer der anderen Führungsschienen (53) am Bereich einer der gelenkigen Verbindungen der ersten Anns (45) angelenkt ist, wobei die Schubstange im übrigen auf dem zweiten Dachteil (17) angelenkt ist sodass die Verlagerung des ersten Armes (45) entlang der Führungsschienen (53, 57) den der Schubstange (49) mitnimmt und unter Anhebung mindestens der Vorderkante (17b) des zweiten Dachteils in bezug auf die Hinterkante (15a) des ersten Dachteils das Schwenken des zweiten Dachteils nach unten und nach hinten veranlasst.

7. Fahrzeug nach Anspruch 6, **dadurch gekennzeichnet, dass** die Schubstange (49) zwei Stangen (49, 55) umfasst, die um eine Richtung quer zur Fahrzeuglängsachse (XX') gelenkig miteinander verbunden sind.

8. Fahrzeug nach einem der Ansprüche 1 bis 5, **dadurch gekennzeichnet, dass** der erste und der zweite Arm (43, 47) gebogen und in Richtung der Fahrzeuglängsachse (XX') gegeneinander versetzt sind und auf der einen Seite am zweiten Dachteil (17) und auf der anderen Seite am Fahrzeugkörper (21) angelenkt sind, wobei einer dieser Arme (43) unter anderem mit dem ersten Dachteil (15) verbunden ist, um beim Zurückklappen des Daches das zweite Dachteil (17) nach unten und nach hinten zu schwenken, welches das erste Dachteil mitnimmt, mit dem er folglich verbunden ist, und dadurch eine Anhebung mindestens der Vorderkante (17b) dieses zweiten Dachteils bewirkt, was zeitlich vor dem relativen Verlagern des ersten und zweiten Dachteils für deren Anordnung nebeneinander erfolgt.

9. Fahrzeug nach Anspruch 8, **dadurch gekennzeichnet, dass** seitlich auf jeder Seite des Daches einer der Arme (43), der Antrieb für das nach hinten und unten Schwenken des zweiten Dachteils (17) ist, an diesem Teil weiter hinten als der zweite Arm (47) verbunden ist, welcher an dem Fahrzeugkörper (21) weiter hinten als der erste Arm verbunden ist, wobei die Verbindungen des ersten und zweiten Arms am Fahrzeugkörper zum oberen und vorderen Bereich des Stauraums (5) hin angeordnet sind.

10. Fahrzeug nach einem der vorstehenden Ansprüche, **dadurch gekennzeichnet, dass** das erste und zweite Dachteil zwischen einem Halteralunen für die Windschutzscheibe (23) vorne und einem am Fahrzeugkörper (21) befestigen, rückseitige Dachabschnitt (19) angeordnet sind, welcher seitliche Säulen umfasst, die ein Rückfenster begrenzen, wobei das zweite Dachteil einen hinteren Rand (17a) aufweist, der sich zur Vertikalrichtung schräg erstreckt und eine zum vorderen Rand (19a) der hinteren, feststehenden Dachpartie im wesentlichen komplementäre Form aufweist, die das nach hinten und unten Schwenken des zweiten Dachteils beim Öffnen des Daches begünstigt.
